# EUROPEAN PATENT SPECIFICATION

(11) **EP 3 474 346 B1**
(45) Date of publication and mention of the grant of the patent: **17.06.2020**
(21) Application number: 17197831.5
(22) Date of filing: 23.10.2017
(51) Int. Cl.: H01M 2/14, H01M 4/04, H01M 10/0562

(54) **METHOD, APPARATUS AND COMPUTER PROGRAM FOR MANUFACTURING AN APPARATUS**
VERFAHREN, VORRICHTUNG UND COMPUTERPROGRAMM ZUR HERSTELLUNG EINER VORRICHTUNG
PROCÉDÉ, APPAREIL ET PROGRAMME INFORMATIQUE PERMETTANT DE FABRIQUER UN APPAREIL

(43) Date of publication of application: 24.04.2019
(73) Proprietor: Nokia Technologies Oy, 02610 Espoo (FI)
(72) Inventor: Zarra, Salvatore, Cambridge, CB4 1DT (GB)
(74) Representative: Whiting, Gary

(56) References cited:
- KR-A- 20170 012 508
- KR-A- 20170 012 656
- US-A1- 2012 009 331
- US-A1- 2012 295 144

## Description

### Technical Field

The present disclosure relates to methods, apparatus and computer programs for manufacturing fibre-shaped batteries.

### Background

Fibre-shaped batteries can be used for energy storage.

The listing or discussion of a prior-published document or any background in this specification should not necessarily be taken as an acknowledgement that the document or background is part of the state of the art or is common general knowledge.

### Summary

According to a first aspect, there is provided a method comprising:
providing separate flows of an anode liquid, an electrolyte liquid and a cathode liquid; and
bringing together and solidifying the separate flows to form a solid fibre-shaped battery having a tubular electrolyte layer with an anode layer and a cathode layer arranged on different sides of the electrolyte layer, the electrolyte layer, the anode layer and the cathode layer being formed from the electrolyte liquid, the anode liquid and the cathode liquid respectively.

Through the present disclosure, the electrolyte layer, the anode layer and the cathode layer being formed from the electrolyte liquid, the anode liquid and the cathode liquid respectively should be interpreted to mean that (i) the electrolyte layer is formed from the electrolyte liquid, (ii) the anode layer is formed from the anode liquid and (iii) the cathode layer is formed from the cathode liquid.

One of the anode layer and the cathode layer may be tubular and may at least partially surround the tubular electrolyte layer. The other of the anode layer and the cathode layer may be arranged inwardly of the tubular electrolyte layer and may be at least partially surrounded thereby.

At least two of the anode layer, electrolyte layer and cathode layer of the fibre-shaped battery may be coaxial.

Providing the separate flows of the anode liquid, electrolyte liquid and cathode liquid may comprise providing the three liquids flowing in three respective subchannels separated by respective subchannel walls, the electrolyte liquid flowing through a tubular electrolyte subchannel and the anode liquid and cathode liquid flowing through respective subchannels on different sides of the tubular electrolyte subchannel. Bringing together the separate flows may comprise bringing the liquids to flow together in a layered arrangement within a single channel.

One of the anode liquid and the cathode liquid may flow in a tubular subchannel which at least partially surrounds the tubular electrolyte subchannel and the other of the anode liquid and the cathode liquid may flow in a subchannel which is arranged inwardly of the tubular electrolyte subchannel and is at least partially surrounded thereby.

The three subchannels may be substantially coaxial and the layers of the layered arrangement may be substantially coaxial such that the battery comprises a coaxial fibre-shaped battery with a coaxial anode layer, electrolyte layer and cathode layer.

The step of solidifying may be performed within the single channel.

The step of solidifying may comprise at least one of solidifying by UV radiation, heating and cooling.

At least one of the liquids may include cross-linking agents that are activated in the solidifying step so as to solidify the respective liquid into the respective solid layer.

The method may further comprise, directly following formation of the solid fibre-shaped battery, directly providing the solid fibre-shaped battery to a textile production apparatus as part of a continuous process.

The method may further comprise integrating, by the textile production apparatus, the fibre-shaped battery into a smart textile.

The fibre-shaped battery may comprise one or more additional layers inside, outside and/or between the anode, cathode and electrolyte layers. The method may further comprise providing and solidifying respective liquids for the one or more additional layers.

The one or more additional layers may comprise one or more of an anode charge collector layer, a cathode charge collector layer, an outer protective layer and an outer textile layer.

The anode liquid may contain one or more of: metal, metal oxide, and carbon components.

The cathode liquid may contain one or more of: metal, metal oxide, and carbon components.

The electrolyte liquid may contain one or more of: ion conducting oligomers, ion conducting polymers, ion conducting gels, ion conducting oxides.

At least one of the anode liquid, the electrolyte liquid and the cathode liquid may be a paste, an ink, a suspension or a combination thereof.

The fibre-shaped battery may be one of a metal-air, metal-ion, metal-metal hydride, metal-oxide, metal-metal oxide, metal-halide or metal-carbon battery.

According to a second aspect, there is provided an apparatus configured to:
provide separate flows of an anode liquid, an electrolyte liquid and a cathode liquid; and
bring together and solidify the separate flows to form a solid fibre-shaped battery having a tubular electrolyte layer with an anode layer and a cathode layer arranged on different sides of the electrolyte layer, the electrolyte layer, the anode layer and the cathode layer being formed from the electrolyte liquid, the anode liquid and the cathode liquid respectively.

According to a third aspect, there is provided a system configured to:
provide separate flows of an anode liquid, an electrolyte liquid and a cathode liquid; and
bring together and solidify the separate flows to form a solid fibre-shaped battery having a tubular electrolyte layer with an anode layer and a cathode layer arranged on different sides of the electrolyte layer, the electrolyte layer, the anode layer and the cathode layer being formed from the electrolyte liquid, the anode liquid and the cathode liquid respectively.

According to a fourth aspect, there is provided a computer readable medium comprising computer program code stored thereon, the computer readable medium and computer program code being configured to, when run on at least one processor, cause a system or apparatus to:
provide separate flows of an anode liquid, an electrolyte liquid and a cathode liquid; and
bring together and solidify the separate flows to form a solid fibre-shaped battery having a tubular electrolyte layer with an anode layer and a cathode layer arranged on different sides of the electrolyte layer, the electrolyte layer, the anode layer and the cathode layer being formed from the electrolyte liquid, the anode liquid and the cathode liquid respectively.

According to a fifth aspect, there is provided an apparatus, the apparatus comprising:
means for providing separate flows of an anode liquid, an electrolyte liquid and a cathode liquid; and
means for bringing together and solidifying the separate flows to form a solid fibre-shaped battery having a tubular electrolyte layer with an anode layer and a cathode layer arranged on different sides of the electrolyte layer, the electrolyte layer, the anode layer and the cathode layer being formed from the electrolyte liquid, the anode liquid and the cathode liquid respectively.

The present disclosure includes one or more corresponding aspects, examples or features in isolation or in various combinations whether or not specifically stated (including claimed) in that combination or in isolation. Corresponding means and corresponding functional units for performing one or more of the discussed functions are also within the present disclosure.

The steps of any method disclosed herein do not have to be performed in the exact order disclosed, unless explicitly stated or understood by the skilled person.

Corresponding computer programs for implementing one or more of the methods disclosed are also within the present disclosure and encompassed by one or more of the described examples.

The present disclosure includes one or more corresponding aspects, example embodiments or features in isolation or in various combinations whether or not specifically stated (including claimed) in that combination or in isolation. Corresponding means for performing one or more of the discussed functions are also within the present disclosure.

The above summary is intended to be merely exemplary and non-limiting.

### Brief Description of the Figures

A description is now given, by way of example only, with reference to the accompanying drawings, in which:
Figure 1 shows schematically one example of a fibre-shaped battery as described herein;
Figures 2a-c show cross-sectional views of three examples of fibre-shaped batteries as described herein;
Figure 3 shows schematically one example of an apparatus used in a method as described herein;
Figure 4 shows a cross-sectional view of the apparatus of Figure 3;
Figure 5 shows schematically several steps of a method described herein;
Figure 6 shows the main steps of a method as described herein; and
Figure 7 shows a computer-readable medium comprising a computer program configured to perform, control or enable a method described herein.

### Detailed Description

There will now be described methods, apparatus, systems and computer programs for manufacturing a fibre-shaped battery by solidifying flows of liquid components into solid anode, electrolyte and cathode layers.

Fibre-shaped batteries are multicomponent elongate fibres including an anode layer, a cathode layer and an electrolyte layer arranged so as to function as a battery. Such batteries can be used to provide power for many different applications. For example, fibre-shaped batteries can be used in wearable technology applications (e.g. activity trackers, clothing) and smart textile applications (e.g. clothing, home furnishings). Current methods of manufacture typically involve multiple deposition steps, for example dipping a fibre substrate or metal spring, or wrapping sheets around a fibre substrate or metal spring. However, these methods are disadvantageously cumbersome and they are difficult to scale up. They also do not produce continuous fibre-shaped batteries (e.g a discrete length of fibre substrate is dipped, or a discrete length of sheet is wrapped around a discrete length of substrate). Additionally, these methods of manufacturing fibre-shaped batteries cannot be integrated with the manufacturing of an end product. Instead, a battery must first be created and then separately incorporated into products.

The present disclosure may or may not address some or all of these problems.

The present disclosure relates to manufacturing a fibre-shaped battery by: providing separate flows of an anode liquid, an electrolyte liquid and a cathode liquid; and bringing together and solidifying the separate flows to form a solid fibre-shaped battery having a tubular electrolyte layer with an anode layer and a cathode layer arranged on different sides of the electrolyte layer, the electrolyte layer, the anode layer and the cathode layer being formed from the solidified electrolyte liquid, anode liquid and cathode liquid respectively.

In some embodiments, the anode liquid, electrolyte liquid and cathode liquid may flow through subchannels which keep the liquid flows separate until they are brought together to flow, in a layered arrangement, along a single channel. At this point (e.g. within the single channel) the liquids are solidified (e.g. UV- or heat-cured) to form the solid fibre-shaped battery. This can be thought of as a fibre-spinning method (or more generally an extrusion method) and the subchannel arrangement could be embodied as/in a spinneret.

The disclosed methods can be used to make a variety of types of fibre-shaped battery (in terms of, for example, different battery chemistries, different fibre widths and different layer width ratios). For example, fibre-shaped batteries with submillimetre diameters can be made using the disclosed method in combination with microfluidic spinning techniques.

The present disclosure thus provides a method of manufacture which is advantageously simple, can produce continuous fibre-shaped batteries and which is easily scalable. The present disclosure does not require complicated and/or non-scalable deposition techniques or equipment, increasing the cost-efficiency of the method. It is also possible to use the same equipment to manufacture a range of fibre-battery types as the relative sizes of the layers within a fibre can be controlled by altering the ratios of flow speed for the different constituent liquids. In some embodiments, this method of manufacture can be integrated with the production of products (e.g. wearable technology and/or smart textile products) by creating the battery in situ and feeding the created battery to a textile production apparatus (e.g. a weaving machine) or other product creation apparatus.

This method will now be described with reference to the Figures.

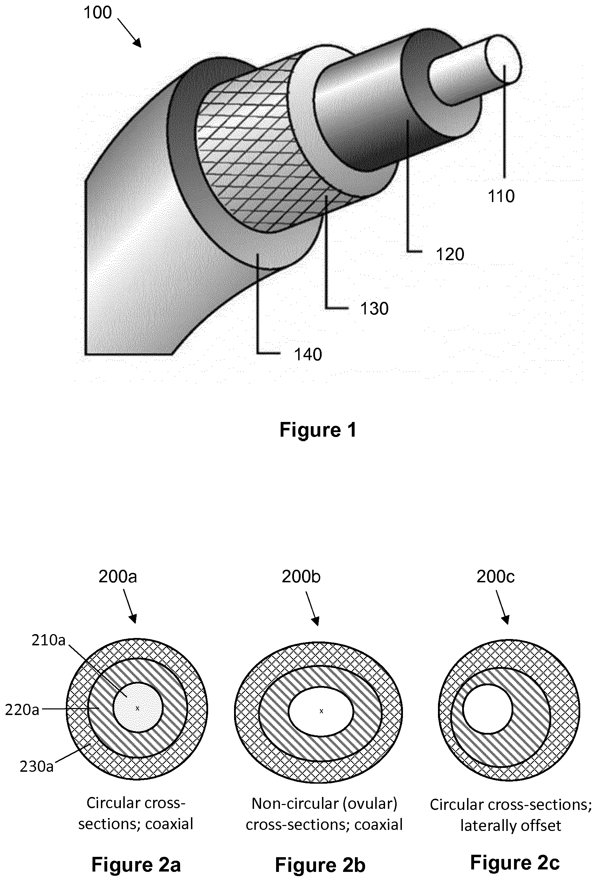

Figure 1 shows schematically a fibre-shaped battery 100 produced by a method according to one embodiment of the present disclosure. In this embodiment, anode layer 110 is surrounded by tubular electrolyte layer 120 which is in turn surrounded by cathode layer 130 and outer protective layer 140. In other embodiments, the cathode layer 130 and the anode layer 110 may be the other way around - that is, the cathode layer 130 may be the innermost layer and the anode layer 110 may surround the tubular electrolyte layer 120. In some embodiments, a fibre-shaped battery may not include outer protective layer 140 and/or may include additional layers (e.g. charge collector layers, textile layers, structural support layers) inside, outside and/or between the anode, cathode and electrolyte layers.

Figures 2a-2c show end-on cross-sectional views of three fibre-shaped batteries 200a, 200b, 200c. Each battery has three layers - anode layer 210, electrolyte layer 220 and cathode layer 230. As shown in Figure 2a, the outer surfaces of each layer of battery 200a (as well as the inner surfaces of layers 220 and 230) has a circular cross-sectional shape. Additionally, the three layers are coaxial, i.e. they share a common axis demarcated by an 'x' which runs longitudinally along the centre of the fibre-shaped battery 200a.

However, the layers of a fibre-shaped battery do not need to have circular cross-sections. This is illustrated in Figure 2b in which the surface(s) of each layer of battery 200b has an ovular cross-section. Other cross-sectional shapes (e.g. squares, hexagons) are also possible. In other embodiments, some but not all of the layers may have circular cross-sections. The layers of a fibre-shaped battery also do not need to be coaxial. This is illustrated in Figure 2c in which the three layers of battery 200c (each with a circular cross-section) do not share a common axis. Instead, the layers are laterally offset with respect to each other. In other embodiments, some but not all of the layers may be coaxial.

Other shapes and lateral arrangements of fibre-shaped battery layers are encompassed by the present disclosure. For example, the present disclosure also encompasses batteries having at least one layer which is both laterally offset and non-circular (combining the features illustrated by Figures 2b and 2c).

It will be appreciated that in each of Figures 2a-2c, the two outer layers 220 and 230 are tubular layers. That is, they are elongate layers having an 'empty' interior region running through/along the elongate fibre in which another substance (e.g. anode layer 210) can be arranged. Thus, electrolyte layer 220 is a tubular layer with anode layer 210 and cathode layer 230 arranged on different side of the electrolyte layer 230. In particular, Figures 2a-2c show anode layer 210 being arranged inwardly of electrolyte layer 220 and being surrounded thereby, and cathode layer 230 being arranged so as to surround the electrolyte layer 220. As mentioned above, the tubular layers can have various cross-sectional shapes, e.g. circular, ovular, square or hexagonal.

It will be appreciated that the cross-sectional shapes and positions of the three (of more) layers may vary slightly along the length of the fibre, e.g. due to slight lateral drifts in the liquids whilst they are solidifying.

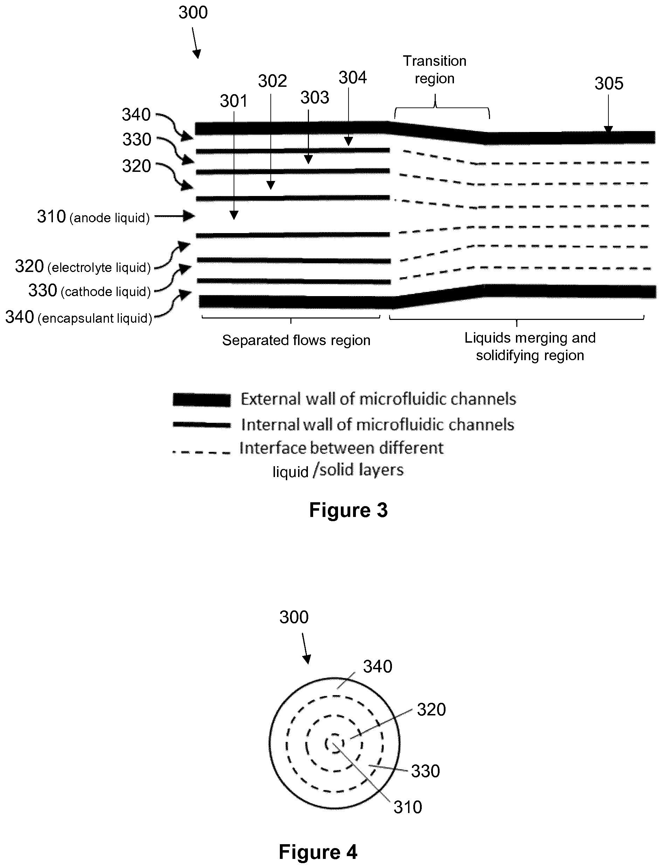

Figure 3 shows a side cross-sectional view along a channel 300 which is used in some embodiments of the present method to manufacture a fibre shaped battery (such as fibre-shaped battery 100 or 200a-c). The channel 300 is defined by an external wall 305. In a first part of the channel ('separated flows region'), there are three internal cylindrical walls which define four interior coaxial sub-channels 301, 302, 303 and 304. In a second part of the channel ('merging and solidifying region'), there are no internal walls or sub-channels. The second part of channel 300 may be thought of as a 'single channel' (as opposed to the multiple sub-channels 301-304 in the first part of channel 300). As shown by the 'transition region' in Figure 3, the width of the second part of channel 300 decreases slightly to compensate for the space no longer occupied by the internal walls and/or to reduce the width of each of the liquid/solid layers (other embodiments may not include this narrowing feature). In some embodiments, the internal walls may end at different longitudinal points and so some of the internal walls may protrude slightly into the transition region.

In use, separate flows of four liquids are provided through each of the four sub-channels 301-304, flowing through the first part of the channel and towards the second 'merging and solidifying' part. In the embodiment shown by Figure 3, these liquids are (from innermost to outermost) an anode liquid 310, an electrolyte liquid 320, a cathode liquid 330 and an encapsulant liquid 340 (which forms the outer protective layer 140). In other embodiments, the anode liquid 310 and the cathode liquid 330 may be the other way around, i.e. the cathode liquid 330 may be the innermost layer and the anode liquid 310 may surround the electrolyte liquid 320. In some embodiments, the encapsulant liquid 340 may not be present, and/or other liquids may be present in order to form respective additional layers inside, outside and/or between the anode, cathode and electrolyte layers (e.g. a charge collector layer, textile layer, structural support layer). In these cases, a larger or smaller number of subchannels may be used as required.

The separate flows are brought together (or 'merged') to flow in a layered arrangement in the second part of the channel. Bringing together the separate flows comprises reducing the spatial separation between the liquids so that the liquids which are initially spatially separated are able to flow in contacting layers. As shown by the dashed lines in Figure 3, once the liquids have merged they still flow in substantially distinct layers with an interface therebetween - that is, there is (substantially) no mixing between the liquids. It will be appreciated that the longitudinal distance taken for the liquids to merge so as to be in contact with each other at the inter-layer interfaces can vary depending on the (absolute and relative) flow speeds of the liquids, the dimensions of the channel and sub-channels and the (absolute and relative) viscosities of the liquids.

The liquids are also solidified in the second part of the channel. Various methods may be used, for example UV radiation, heating, cooling or a combination thereof. It will be appreciated that the length over which a solidifying method is applied can vary. For example, in some embodiments heating may be applied only in the 'transition region' part of the 'merging and solidifying' region. Alternatively, it may be applied over a longer portion of the 'merging and solidifying' region. In some embodiments, heating (or other solidifying methods) may (additionally or alternatively) be applied towards the end of the 'separated flows' region. Different types of solidifying methods can be used to target different layers and can be applied to the same or different parts of the channel.

Figure 4 shows an end-on cross-sectional view of channel 300, illustrating the coaxial layered arrangement of the four liquid/solid layers in the second 'merging and solidifying' region, with the interfaces therebetween shown by dashed lines. It will be appreciated that the term "liquid/solid layers" is used because towards the start of this second region, the layers will be liquid layers and towards the end of this region, the layers will be solid.

In the embodiments shown in Figures 3 and 4, the anode liquid 310, electrolyte liquid 320 and cathode liquid 330 flow in coaxial subchannels with circular cross-sections, thus producing a coaxial fibre-shaped battery with a coaxial anode layer 110, electrolyte layer 120 and cathode layer 130. However, in other embodiments, the liquids may flow in non-coaxial subchannels and/or sub-channels with non-circular cross-sections (e.g. in order to produce batteries as shown in Figures 2b and 2c).

Furthermore, in other embodiments, the liquids could be brought together to flow in a layered arrangement in the second part of the channel but not be solidified in the second part of the channel. Instead, the liquids could flow, in their layered arrangement, out of the channel and be solidified after leaving the channel. This may increase the efficiency of some solidification methods, though it may only be suitable for particularly viscous liquids which can hold the layered arrangement shape for a short while after leaving the channel 300.

Furthermore, although the embodiments shown in Figures 3 and 4 involve the use of a channel 300 with several tubular internal walls, the present disclosure encompasses other ways of providing and bringing together the separate liquid flows. For example, rather than using a single channel having multiple internal walls which form the internal sub-channels, multiple separate channels could be used with the smaller channels arranged within the larger channels (and supported at at least one end of the channels) so as to form the sub-channels between the walls of the multiple channels. In other embodiments, sub-channels may be used to keep the liquid flows separate prior to solidification but a channel may not be used once the liquids have been brought together. In yet other embodiments, tubular channels may not be used at all.

The present method can be used with various types of battery chemistry, for example metal-air, metal-ion, metal-metal hydride, metal-oxide, metal-metal oxide, metal-halide or metal-carbon batteries.

The term "liquid" encompasses at least viscous liquids, pastes, inks, mixtures, suspensions and other non-gaseous fluids. Any liquid may be chosen as long as once solidified it is capable of functioning as a battery component (e.g. as an anode, a protective layer, a structural layer etc). Various factors can be considered when choosing suitable liquids for a particular battery chemistry, including (absolute and relative) viscosities, physicochemical similarities and differences between the other liquids, possible solidification methods, and the dimensions of the channels and sub-channels.

Each liquid contains one or more active materials which, once the liquid is solidified, allows the solid layer to perform its particular function (e.g. as an anode or a protective layer). In some embodiments, the anode liquid and/or the cathode liquid (and/or any charge collector liquids) can contain one or more of: metal, metal oxide, and carbon components (e.g. Onyx™ inkjet inks, Suprametal® inks, Rotostar UV FP 66 series inks). In some embodiments, the electrolyte liquid can contain one or more of: ion conducting oligomers, ion conducting polymers, ion conducting gels and ion conducting oxides. In some embodiments, one or more of the anode liquid, the cathode liquid, the electrolyte liquid and additional liquids for respective additional layers can contain cross-linking agents. In addition to the active materials, each liquid may also comprise other components which are not related to the primary function of the respective solid layer (e.g. solvents, pigments, solubilizers and surfactants).

In some embodiments, the liquids may be specifically chosen in order to discourage/minimise mixing between liquid layers once the separated liquid flows have been brought together/merged, thus creating sharper interfaces between the solid layers of the solid fibre-shaped battery. For example, viscous liquids or pastes may be chosen. Alternatively or additionally, physicochemically different liquids may be chosen to flow in adjacent layers, e.g. a hydrophobic liquid and a hydrophilic liquid.

Additionally or alternatively, the relative liquid flow speeds may be chosen to discourage/minimise mixing between liquid layers (where the flow speed of a layer in the second region is controlled by the rate at which each liquid is provided into the first region). For example, the electrolyte liquid may flow at a faster speed than the anode and cathode liquids on either side of it, thus minimising the mixing between the two.

The relative widths of each layer of the fibre-shaped battery is primarily governed by the relative widths of the sub-channels 301-304. However, the layer widths can be affected by other factors. For example, the relative viscosities and/or flow speeds of each of the liquids may affect the relative widths of the layers within the fibre, e.g. a liquid that is faster flowing and/or less viscous than the adjacent liquid(s) may generally be expected to produce a solid layer that has a smaller relative width that than that of the corresponding sub-channel. Thus, the relative widths of the different layers can be influenced by adjusting the ratios of viscosity and/or flow speed between the different liquids.

As previously mentioned, various solidifying methods may be used, for example UV radiation, heating, cooling or a combination thereof. Other solidification method are also encompassed by the present disclosure. Different methods may be suitable or preferred for different types of liquid and/or different depths of layer, depending on the exact solidifying mechanism involved. The length of the region over which a solidification method is applied may be chosen depending on the method, the depth of the layer(s) being targeted, the formulation of the liquids and the liquid flow speed.

For example, UV radiation can solidify a liquid by activating cross-linking agents within the liquid. This can be most suitable for an outer layer (e.g. a protective layer, or an outer anode/cathode layer). Heating (IR radiation) can involve two solidifying mechanisms. Firstly, solvent removal by evaporation (most effective for an outer layer) and secondly activation of cross-linking agents above a certain temperature (potentially more effectively for middle or outer layers). Cooling can solidify a liquid that is solid at the cooling temperature and which has been previously heated to liquefy it to allow it to flow. It can then be recooled (e.g. to room temperature) to resolidify it.

Different techniques can be used for different layers if desired, for example cooling for an inner layer, heating for an intermediate layer and UV radiation for an outer layer. This can be performed in a single step (e.g. a single temperature could simultaneously cool a hot inner liquid and heat a cooler intermediate layer, and the UV radiation could be applied at the same time) or this can be done in multiple stages.

A fibre-shaped battery can include one or more additional layers as well as the anode layer, electrolyte layer and cathode layer. These can be located inside, outside and/or between the anode, cathode and electrolyte layers, and the method would further comprise providing and solidifying respective liquids for the one or more additional layers. Examples of additional layers include an outer protective layer, an outer textile layer (e.g. to improve the appearance of the battery when incorporated into smart textiles) and a structural support layer (e.g. as the innermost layer). Other examples include an anode charge collector layer and a cathode charge collector layer which may be useful if the anode layer and/or the cathode layer are not very electrically conductive (the charge collector layer would be situated on the other side of the anode/cathode to the electrolyte and it would conduct electrons between the electrode and the external circuit).

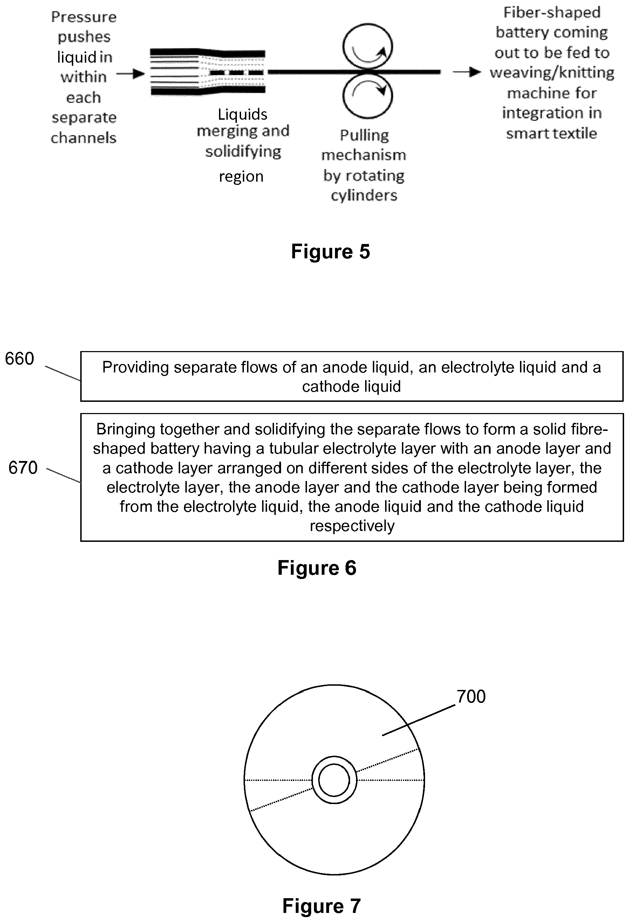

Figure 5 illustrates the method steps of (i) providing separate liquid flows through respective sub-channels, (ii) bringing together ('merging') and solidifying the liquid flows, (iii) using rollers ('rotating cylinders') to draw/pull the fibre-shaped battery away from the battery-making apparatus (e.g. channel 300) and (iv) feeding the fibre-shaped battery to a textile production apparatus (e.g. a weaving/knitting machine). In other embodiments, rollers may be used to draw out and support the fibre-shaped battery before it is wrapped onto rolls/drums.

As previously mentioned, fibre-shaped batteries can be used in wearable technology applications and smart textile applications due to their flexible properties. In some embodiments of the present disclosure, the manufacture of fibre-shaped batteries can be integrated with the manufacture of an end product (e.g. a textile or garment). That is, the battery can be manufactured 'in situ' and directly provided from the manufacture apparatus (e.g. the second part of channel 300) to a textile production apparatus (e.g. a weaving or knitting machine) as part of a continuous manufacturing process. Thus, there is no need to have a discrete length of fibre-shaped battery already made and ready to be used in the textile production apparatus. Instead, the fibre-shaped battery can be made in situ when it is required by the textile production apparatus.

In some embodiments, the textile production apparatus may perform additional steps before using the fibre-shaped battery to produce a textile or garment. Examples of additional steps include dying the fibre or treating the fibre with water-resistant material.

The textile production apparatus may incorporate the fibre-shaped battery into a smart textile in various ways, for example it may be sewn (e.g. embroidered) onto an already made garment, or it may be directly incorporated during the sewing/knitting/weaving of a garment or textile. A single thread of battery fibre could be used on its own, or it could be combined with a thread of textile fibre. A textile outer layer could be incorporated into/onto the battery before it is used, either as part of the extrusion process or as additional step performed by the textile production apparatus, to improve the appearance of the battery fibre when incorporated into a textile.

Figure 6 shows a flow diagram illustrating the method steps of: providing separate flows of an anode liquid, an electrolyte liquid and a cathode liquid 660; and bringing together and solidifying the separate flows to form a solid fibre-shaped battery having a tubular electrolyte layer with an anode layer and a cathode layer arranged on different sides of the electrolyte layer, the electrolyte layer, the anode layer and the cathode layer being formed from the electrolyte liquid, the anode liquid and the cathode liquid respectively 670.

Apparatus and/or systems can be configured to perform the method of Figure 6. In some embodiments, an apparatus could comprise channel 300, including sub-channels 301-304, along with means to solidify liquids provided within the channel. A system could include channel 300 including sub-channels 301, solidification means, and means for causing and controlling flow along channel 300. A system may further comprise guidance means (e.g. rollers) for guiding the solid fibre-shaped battery between channel 300 and a textile production apparatus.

Figure 7 illustrates schematically a computer readable medium 700 providing a program configured to cause a system or apparatus to perform the method steps 660, 670 of Figure 6. In this example, the computer/processor readable medium is a disc such as a digital versatile disc (DVD) or a compact disc (CD). The computer program code may be distributed between the multiple memories of the same type, or multiple memories of a different type, such as ROM, RAM, flash, hard disk, solid state, etc.

As previously mentioned, the method described herein (and the associated apparatus, system and computer readable medium) provides multiple advantages over previous methods. It is advantageously simple, reproducible, can continually produce continuous fibre-shaped batteries and is easily scalable. It does not require complicated and/or non-scalable deposition techniques or equipment, increasing the cost-efficiency of the method. It is possible to use the same equipment to manufacture a range of fibre-battery types as (i) the composition of each layer can be changed by altering the formulation of the respective liquids, and (ii) the relative sizes of the layers within a fibre can be controlled by altering the ratios of flow speed for the different constituent liquids. In some embodiments, this method of manufacture can be integrated with the production of products by creating the battery in situ and feeding the created battery to a textile production apparatus or other product creation apparatus.

Other example embodiments depicted in the figures have been provided with reference numerals that correspond to similar features of earlier described example embodiments. For example, feature number 110 can also correspond to numbers 210a etc. These numbered features may appear in the figures but may not have been directly referred to within the description of these particular example embodiments. These have still been provided in the figures to aid understanding of the further example embodiments, particularly in relation to the features of similar earlier described example embodiments.

It will be appreciated to the skilled reader that any mentioned apparatus and/or other features of particular mentioned apparatus/device may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/functional units.

In some example embodiments, a particular mentioned apparatus may be preprogrammed with the appropriate software to carry out desired operations, and wherein the appropriate software can be enabled for use by a user downloading a "key", for example, to unlock/enable the software and its associated functionality. Advantages associated with such example embodiments can include a reduced requirement to download data when further functionality is required for a device, and this can be useful in examples where a device is perceived to have sufficient capacity to store such preprogrammed software for functionality that may not be enabled by a user.

It will be appreciated that any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "computer" described herein can comprise a collection of one or more individual processors/processing elements that may or may not be located on the same circuit board, or the same region/position of a circuit board or even the same device. In some example embodiments one or more of any mentioned processors may be distributed over a plurality of devices. The same or different processor/processing elements may perform one or more functions described herein.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to different example embodiments thereof, it will be understood that various omissions and substitutions and changes in the form and details of the devices described may be made by those skilled in the art.

For example, it is expressly intended that all combinations of those elements which perform substantially the same function in substantially the same way to achieve the same results are within the scope of the invention. Moreover, it should be recognized that structures and/or elements shown and/or described in connection with any disclosed form or example embodiment may be incorporated in any other disclosed or described or suggested form or example embodiment as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. A method comprising:
providing separate flows of an anode liquid (310), an electrolyte liquid (320) and a cathode liquid (330); and
bringing together and solidifying the separate flows to form a solid fibre-shaped battery (100, 200a-c) having a tubular electrolyte layer (120, 220a) with an anode layer (110, 210a) and a cathode layer (130, 230a) arranged on different sides of the electrolyte layer, the electrolyte layer, the anode layer and the cathode layer being formed from the electrolyte liquid, the anode liquid and the cathode liquid respectively,
wherein providing the separate flows of the anode liquid (310), electrolyte liquid (320) and cathode liquid (330) comprises providing the three liquids flowing in three respective subchannels separated by respective subchannel walls, the electrolyte liquid flowing through a tubular electrolyte subchannel (302) and the anode liquid and cathode liquid flowing through respective subchannels (301, 303) on different sides of the tubular electrolyte subchannel, and
wherein bringing together the separate flows comprises bringing the liquids to flow together in a layered arrangement within a single channel.

2. A method according to claim 1, wherein one of the anode layer (110, 210a) and the cathode layer (130, 230a) is tubular and at least partially surrounds the tubular electrolyte layer (120, 220a) and the other of the anode layer and the cathode layer is arranged inwardly of the tubular electrolyte layer and is at least partially surrounded thereby.

3. The method of claim 1, wherein at least two of the anode layer (110, 210a), electrolyte layer (120, 220a) and cathode layer (130, 230a) of the fibre-shaped battery (110, 200a-c) are coaxial.

4. A method according to claim 1, wherein the three subchannels (301, 302, 303) are substantially coaxial and wherein the layers of the layered arrangement are substantially coaxial such that the battery (100, 200a-c) comprises a coaxial fibre-shaped battery with a coaxial anode layer (110, 210a), electrolyte layer (120, 220a) and cathode layer (130, 230a).

5. The method of claim 1, wherein the step of solidifying is performed within the single channel and comprises at least one of solidifying by UV radiation, heating and cooling.

6. The method of claim 1, wherein at least one of the liquids (310, 320, 330) includes cross-linking agents that are activated in said solidifying step so as to solidify the respective liquid into the respective solid layer.

7. The method of claim 1, further comprising, directly following formation of the solid fibre-shaped battery (100, 200a-c), directly providing the solid fibre-shaped battery to a textile production apparatus as part of a continuous process.

8. The method of claim 7, wherein the method further comprises integrating, by the textile production apparatus, the fibre-shaped battery (100, 200a-c) into a smart textile.

9. The method of claim 1, wherein the fibre-shaped battery (100, 200a-c) comprises one or more additional layers (140) inside, outside and/or between the anode (110, 210a), cathode (130, 230a) and electrolyte (120, 220a) layers, and wherein the method further comprises providing and solidifying respective liquids (340) for the one or more additional layers.

10. The method of claim 9, wherein the one or more additional layers comprise one or more of an anode charge collector layer, a cathode charge collector layer, an outer protective layer (140) and an outer textile layer.

11. The method of claim 1, wherein:
the anode liquid (310) contains one or more of: metal, metal oxide and carbon components; and/or
the cathode liquid (330) contains one or more of: metal, metal oxide, and carbon components; and/or
the electrolyte liquid (320) contains one or more of: ion conducting oligomers, ion conducting polymers, ion conducting gels and ion conducting oxides.

12. The method of claim 1, wherein at least one of the anode liquid (310), the electrolyte liquid (320) and the cathode liquid (330) is a paste, an ink, a suspension or a combination thereof.

13. A system or apparatus configured to:
provide separate flows of an anode liquid (310), an electrolyte liquid (320) and a cathode liquid (330); and
bring together and solidify the separate flows to form a solid fibre-shaped battery (100, 200a-c) having a tubular electrolyte layer (120, 220a) with an anode layer (110, 210a) and a cathode layer (130, 230a) arranged on different sides of the electrolyte layer, the electrolyte layer, the anode layer and the cathode layer being formed from the electrolyte liquid, the anode liquid and the cathode liquid respectively,
wherein providing the separate flows of the anode liquid (310), electrolyte liquid (320) and cathode liquid (330) comprises providing the three liquids flowing in three respective subchannels separated by respective subchannel walls, the electrolyte liquid flowing through a tubular electrolyte subchannel (302) and the anode liquid and cathode liquid flowing through respective subchannels (301, 303) on different sides of the tubular electrolyte subchannel, and
wherein bringing together the separate flows comprises bringing the liquids to flow together in a layered arrangement within a single channel.

14. A computer readable medium (700) comprising computer program code stored thereon, the computer readable medium and computer program code being configured to, when run on at least one processor, cause a system or apparatus to:
provide separate flows of an anode liquid (310), an electrolyte liquid (320) and a cathode liquid (330); and
bring together and solidify the separate flows to form a solid fibre-shaped battery (100, 200a-c) having a tubular electrolyte layer (120, 220a) with an anode layer (110, 210a) and a cathode layer (130, 230a) arranged on different sides of the electrolyte layer, the electrolyte layer, the anode layer and the cathode layer being formed from the electrolyte liquid, the anode liquid and the cathode liquid respectively
wherein providing the separate flows of the anode liquid (310), electrolyte liquid (320) and cathode liquid (330) comprises providing the three liquids flowing in three respective subchannels separated by respective subchannel walls, the electrolyte liquid flowing through a tubular electrolyte subchannel (302) and the anode liquid and cathode liquid flowing through respective subchannels (301, 303) on different sides of the tubular electrolyte subchannel, and
wherein bringing together the separate flows comprises bringing the liquids to flow together in a layered arrangement within a single channel.

## Patentansprüche

1. Verfahren, umfassend:
Bereitstellen von separaten Strömen einer Anodenflüssigkeit (310), einer Elektrolytflüssigkeit (320) und einer Kathodenflüssigkeit (330); und
Zusammenbringen und Verfestigen der separaten Ströme, um eine faserförmige Feststoffbatterie (100, 200a-c) zu bilden, die eine röhrenförmige Elektrolytschicht (120, 220a) mit einer Anodenschicht (110, 210a) und einer Kathodenschicht (130, 230a) aufweist, die auf unterschiedlichen Seiten der Elektrolytschicht angeordnet sind, wobei die Elektrolytschicht, die Anodenschicht und die Kathodenschicht aus der Elektrolytflüssigkeit, der Anodenflüssigkeit bzw. der Kathodenflüssigkeit gebildet werden,
wobei das Bereitstellen der separaten Ströme der Anodenflüssigkeit (310), der Elektrolytflüssigkeit (320) und der Kathodenflüssigkeit (330) ein Bereitstellen der drei Flüssigkeiten umfasst, die in drei entsprechenden Teilkanälen fließen, die durch entsprechende Teilkanalwände getrennt sind, wobei die Elektrolytflüssigkeit durch einen röhrenförmigen Elektrolytteilkanal (302) fließt und wobei die Anodenflüssigkeit und die Kathodenflüssigkeit durch entsprechende Teilkanäle (301, 303) auf unterschiedlichen Seiten des röhrenförmigen Elektrolytteilkanals fließen, und
wobei das Zusammenbringen der separaten Ströme ein Zusammenbringen der Flüssigkeiten umfasst, um zusammen in einer geschichteten Anordnung innerhalb eines einzigen Kanals zu fließen.

2. Verfahren nach Anspruch 1, wobei eine der Anodenschicht (110, 210a) und der Kathodenschicht (130, 230a) röhrenförmig ist und die röhrenförmige Elektrolytschicht (120, 220a) mindestens teilweise umgibt und wobei die Andere der Anodenschicht und der Kathodenschicht innerhalb der röhrenförmigen Elektrolytschicht angeordnet ist und mindestens teilweise von dieser umgeben wird.

3. Verfahren nach Anspruch 1, wobei mindestens zwei der Anodenschicht (110, 210a), der Elektrolytschicht (120, 220a) und der Kathodenschicht (130, 230a) der faserförmigen Batterie (110, 200a-c) koaxial sind.

4. Verfahren nach Anspruch 1, wobei die drei Teilkanäle (301, 302, 303) im Wesentlichen koaxial sind, und wobei die Schichten der geschichteten Anordnung im Wesentlichen koaxial sind, sodass die Batterie (100, 200a-c) eine koaxiale faserförmige Batterie mit einer koaxialen Anodenschicht (110, 210a), einer koaxialen Elektrolytschicht (120, 220a) und einer koaxialen Kathodenschicht (130, 230a) umfasst.

5. Verfahren nach Anspruch 1, wobei der Schritt des Verfestigens innerhalb eines einzigen Kanals ausgeführt wird und mindestens ein Verfestigen durch UV-Strahlung, Erwärmen oder Kühlen umfasst.

6. Verfahren nach Anspruch 1, wobei mindestens eine der Flüssigkeiten (310, 320, 330) Vernetzungsmittel enthält, die in dem Verfestigungsschritt aktiviert werden, um die entsprechende Flüssigkeit in die entsprechende feste Schicht zu verfestigen.

7. Verfahren nach Anspruch 1, das außerdem direkt nachfolgend zur Bildung der faserförmigen Feststoffbatterie (100, 200a-c), ein direktes Bereitstellen der faserförmigen Feststoffbatterie für eine Textilherstellungsvorrichtung als Teil eines kontinuierlichen Prozesses umfasst.

8. Verfahren nach Anspruch 7, wobei das Verfahren außerdem ein Integrieren der faserförmigen Batterie (100, 200a-c) durch die Textilherstellungsvorrichtung in eine intelligente Textilie umfasst.

9. Verfahren nach Anspruch 1, wobei die faserförmige Batterie (100, 200a-c) eine oder mehrere zusätzliche Schichten (140) innerhalb, außerhalb und/oder zwischen der Anoden- (110, 210a), der Kathoden- (130, 230a) und der Elektrolytschicht (120, 220a) umfasst, und wobei das Verfahren außerdem ein Bereitstellen und Verfestigen entsprechender Flüssigkeiten (340) für die eine oder mehreren zusätzlichen Schichten umfasst.

10. Verfahren nach Anspruch 9, wobei die eine oder mehreren zusätzlichen Schichten eine oder mehrere einer Anodenladungssammlerschicht, einer Kathodenladungssammlerschicht, einer äußeren Schutzschicht (140) und einer äußeren Textilschicht umfassen.

11. Verfahren nach Anspruch 1, wobei:
die Anodenflüssigkeit (310) ein oder mehrere enthält von: Metall, Metalloxid und Kohlenstoffkomponenten; und/oder die Kathodenflüssigkeit (330) ein oder mehrere enthält von: Metall, Metalloxid und Kohlenstoffkomponenten; und/oder
die Elektrolytflüssigkeit (320) ein oder mehrere enthält von: ionenleitenden Oligomeren, ionenleitenden Polymeren, ionenleitenden Gelen und ionenleitenden Oxiden.

12. Verfahren nach Anspruch 1, wobei die mindestens eine der Anodenflüssigkeit (310), der Elektrolytflüssigkeit (320) und der Kathodenflüssigkeit (330) eine Paste, eine Tinte, eine Suspension oder eine Kombination davon ist.

13. System oder Vorrichtung, das oder die konfiguriert ist zum
Bereitstellen von separaten Strömen einer Anodenflüssigkeit (310), einer Elektrolytflüssigkeit (320) und einer Kathodenflüssigkeit (330); und Zusammenbringen und Verfestigen der separaten Ströme, um eine faserförmige Feststoffbatterie (100, 200a-c) zu bilden, die eine röhrenförmige Elektrolytschicht (120, 220a) mit einer Anodenschicht (110, 210a) und einer Kathodenschicht (130, 230a) aufweist, die auf unterschiedlichen Seiten der Elektrolytschicht angeordnet sind, wobei die Elektrolytschicht, die Anodenschicht und die Kathodenschicht aus der Elektrolytflüssigkeit, der Anodenflüssigkeit bzw. der Kathodenflüssigkeit gebildet werden,
wobei das Bereitstellen der separaten Ströme der Anodenflüssigkeit (310), der Elektrolytflüssigkeit (320) und der Kathodenflüssigkeit (330) ein Bereitstellen der drei Flüssigkeiten umfasst, die in drei entsprechenden Teilkanälen fließen, die durch entsprechende Teilkanalwände getrennt sind, wobei die Elektrolytflüssigkeit durch einen röhrenförmigen Elektrolytteilkanal (302) fließt und wobei die Anodenflüssigkeit und die Kathodenflüssigkeit durch entsprechende Teilkanäle (301, 303) auf unterschiedlichen Seiten des röhrenförmigen Elektrolytteilkanals fließen, und
wobei das Zusammenbringen der separaten Ströme ein Zusammenbringen der Flüssigkeiten umfasst, um zusammen in einer geschichteten Anordnung innerhalb eines einzigen Kanals zu fließen.

14. Computerlesbares Medium (700), das einen Computerprogrammcode umfasst, der darin gespeichert ist, wobei das computerlesbare Medium und der Computerprogrammcode konfiguriert sind, um, wenn er in mindestens einem Prozessor abläuft, ein System oder eine Vorrichtung veranlassen zum:
Bereitstellen von separaten Strömen einer Anodenflüssigkeit (310), einer Elektrolytflüssigkeit (320) und einer Kathodenflüssigkeit (330); und Zusammenbringen und Verfestigen der separaten Ströme, um eine faserförmige Feststoffbatterie (100, 200a-c) zu bilden, die eine röhrenförmige Elektrolytschicht (120, 220a) mit einer Anodenschicht (110, 210a) und einer Kathodenschicht (130, 230a) aufweist, die auf unterschiedlichen Seiten der Elektrolytschicht angeordnet sind, wobei die Elektrolytschicht, die Anodenschicht und die Kathodenschicht aus der Elektrolytflüssigkeit, der Anodenflüssigkeit bzw. der Kathodenflüssigkeit gebildet werden,
wobei das Bereitstellen der separaten Ströme der Anodenflüssigkeit (310), der Elektrolytflüssigkeit (320) und der Kathodenflüssigkeit (330) ein Bereitstellen der drei Flüssigkeiten umfasst, die in drei entsprechenden Teilkanälen fließen, die durch entsprechende Teilkanalwände getrennt sind, wobei die Elektrolytflüssigkeit durch einen röhrenförmigen Elektrolytteilkanal (302) fließt und wobei die Anodenflüssigkeit und die Kathodenflüssigkeit durch entsprechende Teilkanäle (301, 303) auf unterschiedlichen Seiten des röhrenförmigen Elektrolytteilkanals fließen, und
wobei das Zusammenbringen der separaten Ströme ein Zusammenbringen der Flüssigkeiten umfasst, um zusammen in einer geschichteten Anordnung innerhalb eines einzigen Kanals zu fließen.

## Revendications

1. Procédé comprenant :
la fourniture d'écoulements séparés d'un liquide anodique (310), d'un liquide électrolytique (320) et d'un liquide cathodique (330) ; et
la réunion et la solidification des écoulements séparés pour former une batterie solide en forme de fibre (100, 200a-c) ayant une couche électrolytique tubulaire (120, 220a) avec une couche anodique (110, 210a) et une couche cathodique (130, 230a) disposées sur différents côtés de la couche électrolytique, la couche électrolytique, la couche anodique et la couche cathodique étant formées à partir du liquide électrolytique, du liquide anodique et du liquide cathodique, respectivement,
dans lequel la fourniture des écoulements séparés du liquide anodique (310), du liquide électrolytique (320) et du liquide cathodique (330) comprend la fourniture des trois liquides s'écoulant dans trois sous-canaux respectifs séparés par des parois de sous-canal respectives, le liquide électrolytique s'écoulant à travers un sous-canal électrolytique tubulaire (302) et le liquide anodique et le liquide cathodique s'écoulant à travers des sous-canaux respectifs (301, 303) sur différents côtés du sous-canal électrolytique tubulaire, et
dans lequel la réunion des écoulements séparés comprend la réunion des liquides pour qu'ils s'écoulent ensemble dans un agencement stratifié à l'intérieur d'un unique canal.

2. Procédé selon la revendication 1, dans lequel l'une de la couche anodique (110, 210a) et de la couche cathodique (130, 230a) est tubulaire et entoure au moins partiellement la couche électrolytique tubulaire (120, 220a) et l'autre de la couche anodique et de la couche cathodique est disposée à l'intérieur de la couche électrolytique tubulaire et est au moins partiellement entourée par celle-ci.

3. Procédé de la revendication 1, dans lequel au moins deux couches parmi la couche anodique (110, 210a), la couche électrolytique (120, 220a) et la couche cathodique (130, 230a) de la batterie en forme de fibre (110, 200a-c) sont coaxiales.

4. Procédé selon la revendication 1, dans lequel les trois sous-canaux (301, 302, 303) sont sensiblement coaxiaux et dans lequel les couches de l'agencement stratifié sont sensiblement coaxiales, de telle sorte que la batterie (110, 200a-c) comprend une batterie en forme de fibre coaxiale avec une couche anodique (110, 210a), une couche électrolytique (120, 220a) et une couche cathodique (130, 230a) coaxiales.

5. Procédé de la revendication 1, dans lequel l'étape de solidification est effectuée à l'intérieur de l'unique canal qui comprend une solidification par rayonnement UV, et/ou par chauffage, et/ou par refroidissement.

6. Procédé de la revendication 1, dans lequel au moins un des liquides (310, 320, 330) comporte des agents de réticulation qui sont activés dans ladite étape de solidification de manière à solidifier le liquide respectif en la couche solide respective.

7. Procédé de la revendication 1, comprenant en outre, juste après la formation de la batterie solide en forme de fibre (100, 200a-c), la fourniture directe de la batterie solide en forme de fibre à un appareil de production textile dans le cadre d'un processus continu.

8. Procédé de la revendication 7, le procédé comprenant en outre l'intégration, par l'appareil de production textile, de la batterie en forme de fibre (100, 200a-c) dans un textile intelligent.

9. Procédé de la revendication 1, la batterie en forme de fibre (100, 200a-c) comprenant une ou plusieurs couches supplémentaires (140) à l'intérieur, à l'extérieur et/ou entre les couches anodique (110, 210a), cathodique (130, 230a) et électrolytique (120, 220a), et le procédé comprenant en outre la fourniture et la solidification de liquides respectifs (340) pour la ou les couches supplémentaires.

10. Procédé de la revendication 9, dans lequel la ou les couches supplémentaires comprennent un ou plusieurs éléments parmi une couche de collecteur de charge anodique, une couche de collecteur de charge cathodique, une couche protectrice externe (140) et une couche textile externe.

11. Procédé de la revendication 1, dans lequel :
le liquide anodique (310) contient un ou plusieurs éléments parmi : des constituants à base de métal, oxyde métallique et carbone ; et/ou
le liquide cathodique (330) contient un ou plusieurs éléments parmi : des constituants à base de métal, oxyde métallique et carbone ; et/ou
le liquide électrolytique (320) contient un ou plusieurs éléments parmi : des oligomères conducteurs d'ions, des polymères conducteurs d'ions, des gels conducteurs d'ions et des oxydes conducteurs d'ions.

12. Procédé de la revendication 1, dans lequel au moins un liquide parmi le liquide anodique (310), le liquide électrolytique (320) et le liquide cathodique (330) est une pâte, une encre, une suspension ou une combinaison de celles-ci.

13. Système ou appareil configuré pour :
fournir des écoulements séparés d'un liquide anodique (310), d'un liquide électrolytique (320) et d'un liquide cathodique (330) ; et
réunir et solidifier les écoulements séparés pour former une batterie solide en forme de fibre (100, 200a-c) ayant une couche électrolytique tubulaire (120, 220a) avec une couche anodique (110, 210a) et une couche cathodique (130, 230a) disposées sur différents côtés de la couche électrolytique, la couche électrolytique, la couche anodique et la couche cathodique étant formées à partir du liquide électrolytique, du liquide anodique et du liquide cathodique, respectivement,
dans lequel la fourniture des écoulements séparés du liquide anodique (310), du liquide électrolytique (320) et du liquide cathodique (330) comprend la fourniture des trois liquides s'écoulant dans trois sous-canaux respectifs séparés par des parois de sous-canal respectives, le liquide électrolytique s'écoulant à travers un sous-canal électrolytique tubulaire (302) et le liquide anodique et le liquide cathodique s'écoulant à travers des sous-canaux respectifs (301, 303) sur différents côtés du sous-canal électrolytique tubulaire, et
dans lequel la réunion des écoulements séparés comprend la réunion des liquides pour qu'ils s'écoulent ensemble dans un agencement stratifié à l'intérieur d'un unique canal.

14. Support lisible par ordinateur (700) comprenant un code de programme informatique stocké par-dessus, le support lisible par ordinateur et le code de programme informatique étant configurés pour, lors d'une exécution sur au moins un processeur, conduire un système ou appareil à :
fournir des écoulements séparés d'un liquide anodique (310), d'un liquide électrolytique (320) et d'un liquide cathodique (330) ; et
réunir et solidifier les écoulements séparés pour former une batterie solide en forme de fibre (100, 200a-c) ayant une couche électrolytique tubulaire (120, 220a) avec une couche anodique (110, 210a) et une couche cathodique (130, 230a) disposées sur différents côtés de la couche électrolytique, la couche électrolytique, la couche anodique et la couche cathodique étant formées à partir du liquide électrolytique, du liquide anodique et du liquide cathodique, respectivement,
dans lequel la fourniture des écoulements séparés du liquide anodique (310), du liquide électrolytique (320) et du liquide cathodique (330) comprend la fourniture des trois liquides s'écoulant dans trois sous-canaux respectifs séparés par des parois de sous-canal respectives, le liquide électrolytique s'écoulant à travers un sous-canal électrolytique tubulaire (302) et le liquide anodique et le liquide cathodique s'écoulant à travers des sous-canaux respectifs (301, 303) sur différents côtés du sous-canal électrolytique tubulaire, et
dans lequel la réunion des écoulements séparés comprend la réunion des liquides pour qu'ils s'écoulent ensemble dans un agencement stratifié à l'intérieur d'un unique canal.
